# EUROPÄISCHE PATENTSCHRIFT

(11) **EP 2 792 991 B1**
(45) Veröffentlichungstag und Bekanntmachung des Hinweises auf die Patenterteilung: **25.03.2020**
(21) Anmeldenummer: 14001265.9
(22) Anmeldetag: 05.04.2014
(51) Int. Cl.: F41G 7/22, G02B 13/14, G02B 17/08, G02B 27/64

(54) **Suchkopf für einen Lenkflugkörper**
Seeker for a guided missile
Tête chercheuse pour un missile guidé

(30) Priorität: 20.04.2013 DE 102013006917
(43) Veröffentlichungstag der Anmeldung: 22.10.2014
(73) Patentinhaber: Diehl Defence GmbH & Co. KG, 88662 ÜBERLINGEN (DE)
(72) Erfinder: Barenz, Joachim, DE - 88662 Überlingen (DE); Möller, Jens, DE - 88662 Überlingen (DE)
(74) Vertreter: Diehl Patentabteilung

(56) Entgegenhaltungen:
- EP-A1- 0 467 240
- EP-A1- 2 466 247
- EP-A2- 1 256 832
- DE-A1-102010 015 506
- US-A- 4 615 496
- US-B1- 6 423 969

## Beschreibung

Die Erfindung betrifft einen Suchkopf für einen Lenkflugkörper mit einem Detektor und einer Optik zum Abbilden einer Objektszene auf den Detektor. Die Optik umfasst eine Primäroptik, ein optisches Gelenk zum Verschwenken der Primäroptik relativ zu einer Längsachse des Lenkflugkörpers und eine Detektoroptik.

Ein autonomer Lenkflugkörper muss prinzipiell in der Lage sein, mögliche Ziele aus einem komplexen Hintergrund zu erkennen und gegebenenfalls zu klassifizieren. Um diese Aufgabe leisten zu können, muss eine abbildende Sensorik vorhanden sein, die das Ziel und seine Umgebung abtastet und das Ziel vom Hintergrund diskriminiert. Dies stellt in praktisch allen nutzbaren Spektralbereichen wegen des oft geringen Ziel-Hintergrund-Kontrasts und starken Helligkeitsschwankungen im Hintergrund für autonome Suchköpfe eine sehr anspruchsvolle Aufgabe dar. Schwierig ist insbesondere die Erkennung von solchen Bodenzielen, die für den Suchkopf anhand ihrer unspezifischen Signaturmerkmale nur schwer gegen den Hintergrund abzugrenzen sind, sodass aufgrund von Signaturähnlichkeit die Gefahr der Verwechslung mit benachbarten Objekten besteht. Hierbei besteht auch die Gefahr, dass die schwer erfassbare Signatur die Festlegung eines geeigneten Haltepunkts erschwert, sodass der Lenkflugkörper neben das eigentliche Ziel fliegt.

Aus der DE 10 2010 055 493 A1 ist ein Suchkopf für einen Lenkflugkörper bekannt, der eine Optik zum Abbilden einer Objektszene auf einen Detektor und eine verschwenkbare Primäroptik aufweist. Die DE 10 2010 015 506 A1 beschäftigt sich mit einem temperaturkompensierten, katadioptrischen Cassegrain-Objektiv, welches in einem Suchkopf für einen Detektor verwendet werden kann. Die US 4 615 496 A zeigt einen Infrarot-Suchkopf für einen Flugkörper, der eine Abbildung eines Bereichs um ein potentielles Ziel mittels eines Vidicons, einer Bildaufnahmeröhre erlaubt. Um einen multispektralen Einsatz des Suchkopfs zu erlauben, werden eine Anzahl unterschiedlicher Filter verwendet. Die US 6 423 969 B1 beschäftigt sich mit farbkorrigierten Linsentripletts zur Verwendung mit einem Quantum-Well-Detektor, so dass Abbildungen sowohl im Spektralbereich von 3 -5 µm als auch im Spektralbereich von 8 - 12 µm möglich sind.

Es ist eine Aufgabe der vorliegenden Erfindung, einen Suchkopf anzugeben, mit dem Ziele vor einem optisch schwierigen Hintergrund leichter erfassbar sind.

Diese Aufgabe wird durch einen Suchkopf gemäß den Merkmalen von Patentanspruch 1 gelöst, bei dem die Optik eine für zumindest zwei Infrarot-Spektralbereiche achromatisch korrigierte Optik mit zwei Linsen unterschiedlicher Materialien ist. Die beiden Linsen unterschiedlicher Materialien sind Elemente der Detektoroptik.

Die Erfindung geht von der Überlegung aus, dass durch die Verwendung von zumindest zwei Spektralbereichen erwartet wird, dass die Diskriminierung des Ziels vor einem stark strukturierten Hintergrund verbessert werden kann, da das Ziel sich in den zwei Spektralbereichen signaturmäßig unterschiedlich darstellt. Die beiden Spektralbereiche können im visuellen Spektralbereich, im nahen Infrarot (780 nm bis 3,0 µm), im mittleren Infrarot (3 µm bis 8 µm), im langwelligen Infrarot (8 µm bis 12 µm) oder im sehr langwelligen Infrarot (≥12 µm) liegen. Ebenfalls sinnvoll sind Kombinationen der zuvor genannten Spektralbereiche miteinander, beispielsweise ist es sinnvoll, einen Spektralbereich ins nahe Infrarot (780 nm bis 3,0 µm) und den zweiten Spektralbereich ins mittlere Infrarot (3 µm bis 8 µm) zu legen; auch eine Kombination aus visuellem Spektralbereich und nahem oder mittlerem Infrarot kann z. B. verwendet werden etc. Durch die Verwendung der bi-spektralen Optik kann mehr Zielinformation abgebildet und das Ziel besser erfasst werden.

Nachteilig an der Verwendung der zwei Spektralbereiche beziehungsweise der bi-spektralen Optik ist jedoch, dass der chromatische Längsfehler der Optik die Abbildungsqualität des Ziels und des Hintergrunds soweit herabsetzt, dass der Vorteil der vermehrten Information durch die schlechte Bildqualität wieder eliminiert wird. Durch die achromatische Korrektur der Optik kann der spektrale Längsfehler der Optik für die beiden benutzten Spektralbereiche kontrolliert werden. Die bispektrale Abbildung kann ausreichend scharf sein, sodass der Informationsschwund durch den chromatischen Längsfehler in einem vertretbaren Rahmen bleibt.

Die achromatische Korrektur kann durch die beiden optischen Linsen unterschiedlicher Materialien erreicht werden. Hierbei ist es zweckmäßig, wenn der Brechungsindex der beiden Materialien möglichst gleich ist, sodass ein Quotient aus größerem Brechungsindex geteilt durch den kleineren Brechungsindex vorteilhafterweise nicht größer als 1,2 ist. Diese Werte beziehen sich zweckmäßigerweise auf den mittleren Infrarot-Spektralbereich. Zweckmäßigerweise unterscheidet sich jedoch die Dispersion der beiden unterschiedlichen Materialien zumindest um den Faktor 1,5, insbesondere um zumindest 1,8. Diese Werte beziehen sich zweckmäßigerweise ebenfalls auf den mittleren Infrarot-Spektralbereich.

Die achromatische Korrektur bewirkt, dass die chromatische fokale Verschiebung zweckmäßigerweise zumindest einen Extrempunkt aufweist, beispielsweise ein Maximum. Der Extrempunkt kann ein lokaler oder absoluter Extrempunkt sein. Beispielsweise weist die Optik in beiden Infrarot-Spektralbereichen jeweils eine Nullstelle in der chromatischen fokalen Verschiebung auf, wobei die Nullebene zweckmäßigerweise die Detektorebene ist. Hierdurch bleibt der Farblängsfehler in beiden Infrarot-Spektralbereichen gering, sodass eine Punktabbildung der Objektszene auf den Detektor in beiden Spektralbereichen scharf ist. Vorteilhafterweise ist die Optik für zwei Wellenlängen, die jeweils in der Mitte des einen beziehungsweise des anderen Infrarot-Spektralbereichs liegen, so kompensiert, dass die Fokalebenen dieser Wellenlängen identisch sind. Hierdurch können beide Wellenlängen scharf auf den Detektor abgebildet werden.

Vorteilhafterweise wird innerhalb der einzelnen Spektralbereiche ein Farblängsfehler zugelassen, der den Vorteil einer angepassten Punktbildgröße mit sich bringt. Hierdurch kann die Punktbildgröße an das Detektorraster angepasst und eine homogene Punktbildgröße über einen großen Sehfeldwinkel, zweckmäßigerweise den gesamten Sehfeldwinkel der Optik erreicht werden. Der Farblängsfehler ergibt sich aus der Steigung der chromatischen fokalen Verschiebung über den Spektralbereich.

Um eine befriedigend scharfe Abbildung auf den Detektor zu gewährleisten, ist es zweckmäßig, einen spektralen Bereich zwischen den beiden Infrarot-Spektralbereichen aus der Abbildung herauszunehmen. Dies geschieht beispielsweise durch einen entsprechenden Filter, der den Zwischenspektralbereich ausfiltert. Durch diese Maßnahme muss die Optik nicht über den gesamten und die beiden Spektralbereiche umfassenden Gesamtbereich korrigiert sein, sondern nur für die beiden Arbeitsbereiche der Infrarot-Spektralbereiche. Hierdurch kann das Design der Optik erleichtert werden.

Die Optik ist zweckmäßigerweise eine bi-spektrale Optik, die in den beiden Spektralbereichen abbildet. Vorteilhafterweise ist die Bi-Spektralität dadurch verbessert, dass der Zwischenspektralbereich aus der Abbildung herausgenommen ist. Vorteilhafterweise sind die beiden Infrarot-Spektralbereiche jeweils schmaler als der Zwischenbereich zwischen diesen beiden Bereichen.

Eine besonders vorteilhafte Diskriminierung von Zielobjekten kann erreicht werden, wenn zumindest einer der beiden Infrarot-Spektralbereiche im mittleren Infrarot-Spektralbereich liegt.

Entsprechend der Erfindung ist eine der optischen Linsen aus Silizium und die andere aus Galliumarsenid. Der Brechungsindex von Silizium ist im Infrarot-Spektralbereich sehr ähnlich wie der zu Galliumarsenid. Allerdings ist die chromatische Dispersion von Galliumarsenid im mittleren Infrarot um etwa den Faktor 2 verschieden, wie die von Silizium. Mit diesen beiden optischen Materialien ist eine achromatische Korrektur der Optik innerhalb eines kleinen Bauraums möglich. Ein weiterer Vorteil von Galliumarsenid besteht in der Temperaturstabilität dieses Materials. Weitere zu Silizium kombinierbare Materialien wären beispielsweise ZnS oder ZnSe.

In einer ebenfalls vorteilhaften Ausführungsform der Erfindung wird vorgeschlagen, dass die Optik eine monochromatische Infrarot-Optik ist. Diese ist zweckmäßigerweise ausschließlich in einem der beiden Infrarot-Spektralbereiche transparent und in dem anderen Infrarot-Spektralbereich intransparent, insbesondere in allen anderen Spektralbereichen intransparent. Äquivalent dazu ist eine Insensitivität des Detektors in anderen Spektralbereichen. Die Optik ist also zwar achromatisch auf zwei Spektralbereiche korrigiert, wird jedoch ausschließlich monochromatisch in nur einem Spektralbereich verwendet. Die Monochromasie kann beispielsweise durch einen Filter hergestellt werden, der zweckmäßigerweise nicht nur den Zwischenbereich sondern auch einen der beiden Spektralbereiche herausfiltert.

Diesem Erfindungsdetail liegt die Überlegung zugrunde, dass auch eine monochromatische Optik in einem Infrarot-Suchkopf durch die achromatische Korrektur verbessert werden kann. Denn durch die achromatische Korrektur besteht die Möglichkeit, die Steigung der chromatischen fokalen Verschiebung im transparenten Spektralbereich zu verringern. Die entsprechende Kurve der chromatischen fokalen Verschiebung aufgetragen über die Wellenlänge wird durch die achromatische Korrektur also im verwendeten Spektralbereich flacher. Hierdurch verringert sich der Farblängsfehler zwischen den Randbereichen des spektralen Bereichs, wodurch eine schärfere Abbildung beziehungsweise ein kleineres Punktbild erreicht werden kann.

Lenkflugkörper werden für eine Vielzahl von verschiedenen Aufgaben hergestellt. Die Suchköpfe dieser Lenkflugkörper sind entsprechend ihrer Aufgaben ausgeführt, sodass die Suchköpfe mehrerer Lenkflugkörper auf unterschiedliche Infrarot-Wellenlängen optimiert sind. Um die Komplexität der Herstellung möglichst gering zu halten, ist eine hohe Modularität von Vorteil. Ein Grund-Lenkflugkörper muss hierbei nur in wenigen Details verändert werden, um auf eine andere Wellenlänge optimiert zu werden.

Die Erfindung ist daher auch gerichtet auf ein System aus zumindest zwei Suchköpfen, von denen der eine ein monochromatischer Suchkopf und der andere ein polychromatischer Suchkopf ist, beispielsweise ein bi-chromatischer Suchkopf. Die Suchköpfe sind zweckmäßigerweise ausgeführt, wie im Vorangegangenen beschrieben ist, wobei nur die Detektoroptiken unterschiedlich sein können. Die unterschiedlichen Detektoroptiken können beispielsweise ausschließlich durch unterschiedliche Filter realisiert werden. Filter sind hierbei als optische Elemente der Optik zu verstehen. Durch die unterschiedliche Ausführung der Suchköpfe können diese auf unterschiedliche Aufgaben optimiert sein. Die Monochromasie beziehungsweise Poly-Chromasie kann durch unterschiedliche Optiken erreicht werden.

Zum Erreichen einer hohen Modularität ist es vorteilhaft, wenn die beiden Suchköpfe die gleiche optische Länge vom ersten optischen Element der Optik bis zum Detektor aufweisen. Auf diese Weise können beiden Suchköpfe beziehungsweise beide Optiken kompakt gebaut sein, ohne Bauraum zu verschenken, also leerraumfrei gebaut sein. Die Optiken können hierbei in einem gleichen Gehäuse eingebaut sein, sodass die Gehäuse für die unterschiedlichen Suchköpfe gleich sein können.

Besonders vorteilhaft ist es, wenn die Optiken der beiden Suchköpfe die gleichen Linsen aufweisen. Die unterschiedlichen optischen Eigenschaften können durch Filter realisiert werden. Hierbei kann der bi-chromatische Suchkopf den Vorteil der Identität der Fokalebenen bei jeweils einer Wellenlänge in beiden Spektralbereichen - beziehungsweise der zwei Nullstellen der chromatischen fokalen Verschiebung - nutzen. Der monochromatische Suchkopf kann wiederum die geringe Steigung der chromatischen fokalen Verschiebung und damit eine gute Punktabbildung in seinem einzigen Infrarot-Spektralbereich nutzen. Durch die Verwendung der gleichen, die achromatische Korrektur herstellenden Linsen können beide Effekte mit der gleichen Linsenkombination erreicht werden.

Vorteilhafterweise sind die Optiken der beiden Suchköpfe bis auf unterschiedliche spektrale Filter baugleich. Weiter ist es vorteilhaft, wenn die gesamten Suchköpfe bis auf die unterschiedlichen Filter baugleich sind, wobei eine unterschiedliche Programmierung beziehungsweise unterschiedliche Software nicht als bauartbedingter Unterschied aufgefasst wird.

Weiter ist die Erfindung gerichtet auf ein System aus zwei Lenkflugkörpern mit einem System von zwei Suchköpfen, die wie im Vorhergehenden beschrieben ausgeführt sind.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können die Merkmale des Ausführungsbeispiels explizit isoliert betrachtet und mit einem beliebigen der Ansprüche kombiniert werden.

Es zeigen:
- FIG 1: einen Lenkflugkörper mit einem Suchkopf mit einer Optik und einem Detektor,
- FIG 2: die Optik des Suchkopfs aus FIG 1 in einer vergrößerten Darstellung und
- FIG 3: die chromatische fokale Verschiebung der Optik aufgetragen gegen die Strahlungswellenlänge.

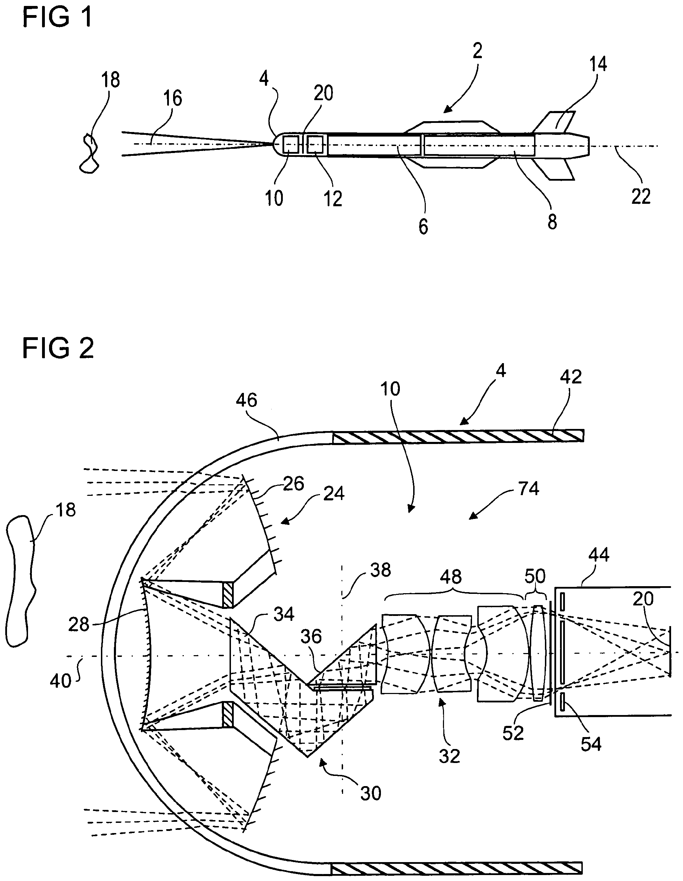

FIG 1 zeigt einen Lenkflugkörper 2 mit einem Suchkopf 4, einem Wirkteil 6 und einem Raketentriebwerk 8. Der Suchkopf 4 ist mit einer Optik 10 und einem Lenkteil 12 ausgestattet, der aus optischen Informationen aus der Optik 10 und einem Detektor 20 Lenksignale zum Lenken des Lenkflugkörpers 2 erzeugt. Unter Verwendung der Lenksignale werden Lenkflügel 14 verstellt, sodass der Lenkflugkörper 2 bei seinem Flug durch die Luft gelenkt wird.

Die Optik 10 hat ein Sehfeld 16 mit einem Durchmesser von ≥5°. Im Sehfeld 16 befindliche Objekte einer Objektszene 18 werden von der Optik 10 auf den Detektor 20 abgebildet, sodass eine Bildverarbeitung des Lenkteils 12 ein abgebildetes Objekt erkennen und klassifizieren kann. Die Lage des Objekts relativ zur Längsachse 22 des Lenkflugkörpers 2 wird zum Erzeugen der Steuersignale zum Anflug auf ein erkanntes Objekt verwendet.

FIG 2 zeigt den vorderen Teil des Suchkopfs 4 des Lenkflugkörpers 2 aus FIG 1 in einer detaillierteren Darstellung. Die Optik 10 ist als Cassegrainoptik ausgeführt und umfasst eine Eingangsoptik 24 mit einem konkaven Primärspiegel 26 und einem konvexen Fangspiegel 28. Über ein optisches Gelenk 30 ist die Eingangsoptik 24 optisch mit einer als Detektorobjektiv ausgeführten Detektoroptik 32 verbunden, durch die die Objektszene 18 in Verbindung mit der Eingangsoptik 24 und dem optischen Gelenk 30 auf den Detektor 20 abgebildet wird.

Das optische Gelenk 30 ist aus zwei Prismenblöcken 34, 36 gebildet, die zueinander beweglich ausgeführt sind. Hierbei ist der erste Prismenblock 34 relativ zum zweiten Prismenblock 36 um eine Nickachse 38 schwenkbar und beiden Prismenblöcke 34, 36 sind um eine Rollachse 40 rotierbar, die identisch zur Längsachse 22 des Lenkflugkörpers 2 liegt. Der erste Prismenblock 34 ist fest mit der Eingangsoptik 24 verbunden, sodass auch diese um die Nickachse 38 und die Rollachse 40 drehbar ist. Die Detektoroptik 32 ist fest mit dem zweiten Prismenblock 36 verbunden, sodass sie ebenfalls im regulären Betrieb des Suchkopfs 4 um die Rollachse 40 drehbar ist.

Der Detektor 20 ist starr mit einem Außengehäuse 42 des Suchkopfs 4 verbunden. Ein Kühler 44 dient zum Kühlen des Detektors 20, der im infraroten Spektralbereich zwischen 2 µm und 5 µm empfindlich ist.

Die Ausrichtung des Sehfelds 16 durch einen Dom 46 hindurch in die Objektszene 18 erfolgt mittels der Cassegrain-Eingangsoptik 24, deren Bildfeld über das optische Gelenk 30 und das anschließende Linsensystem der Detektoroptik 32 auf den strukturfesten Matrixdetektor 20 geführt wird. Das optische Gelenk 30 erlaubt es, die optische Achse der Eingangsoptik 24 innerhalb eines großen Schwenkwinkelbereichs von ±90 ° zu positionieren, wobei das Sehfeld 16 der Eingangsoptik 24 immer auf den Detektor 20 abgebildet wird. Durch Drehung der Eingangsoptik 24 und des optischen Gelenks um die Rollachse 40 kann die optische Achse der Eingangsoptik 24 in eine beliebige Richtung der vorderen Hemisphäre positioniert werden.

Das Detektorobjektiv 32 der katadioptrischen Optik 10 umfasst mehrere Linsen, die in einen ersten Teil 48 und einen zweiten Teil 50 unterteilt sind. Der erste Teil 48 besteht beispielsweise aus drei Linsen, die zweckmäßigerweise als dicke Linsen ausgeführt sind. Der zweite Teil 50 kann aus einer einzigen Linse bestehen.

Während die Linsen einer üblichen Detektoroptik aus optischen Gründen alle aus dem gleichen Material gefertigt sind, sind der erste Teil 48 und der zweite Teil 50 der Detektoroptik 32 aus unterschiedlichen Materialien gefertigt. Hierbei sind die Linsen des ersten Teils 48 aus Silizium und die des zweiten Teils 50 aus Galliumarsenid gefertigt. Weiter enthält die Detektoroptik 32 einen spektralen Filter 52, durch den die in Optik 10 zu einer bi-spektralen Optik wird, die in zwei infraroten Spektralbereichen, die durch den Filter 52 voneinander getrennt sind, transparent ist. Außerhalb dieser beiden Spektralbereiche ist die Optik 10, die den Filter 52 mit umfasst, intransparent. Durch eine Kaltblende 54 wird störende Streu-Wärmestrahlung aus dem Suchkopf 4 ausgeblendet.

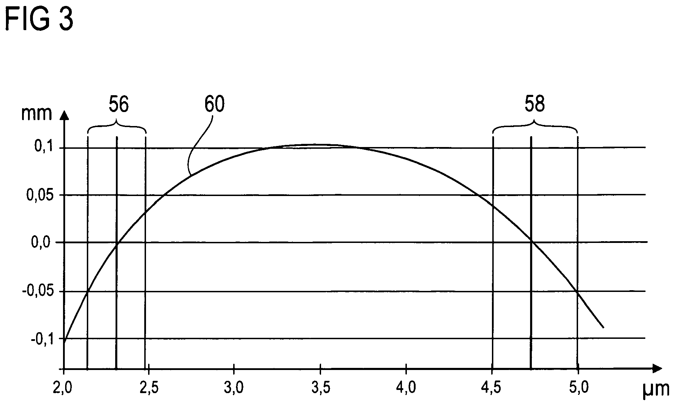

FIG 3 zeigt die beiden Spektralbereiche 56, 58, die zwischen 2,2 µm und knapp 2,5 µm beziehungsweise 4,5 µm und 5 µm liegen. Der Spektralbereich 56 liegt im nahen Infrarot und der Spektralbereich 58 im mittleren Infrarot. Weiter zeigt das Diagramm aus FIG 3 die chromatische fokale Verschiebung des Fokus der Optik 10 beziehungsweise der Detektoroptik 32 aufgetragen gegen die Wellenlänge in µm. Die Ebene bei 0 mm ist die Detektorebene, in der der Detektor 20 angeordnet ist. In dieser Ebene liegt der Fokuspunkt der Detektoroptik 32 bei einer Wellenlänge von etwa 2,3 µm. Der chromatische Längsfehler der Optik 10 beträgt innerhalb des gesamten ersten Spektralbereichs 56 etwa 0,08 mm.

Durch die Linsen der Detektoroptik 32 ist die chromatische fokale Verschiebung so eingestellt, dass der Fokuspunkt der Detektoroptik 32 bei einer Wellenlänge innerhalb des zweiten Spektralbereichs 58, im gezeigten Ausführungsbeispiel bei rund 4,7 µm, wieder in der Detektorebene liegt. Der Fokus liegt also gleich wie im ersten Spektralbereich 56. Der chromatische Längsfehler der Optik 10 beträgt innerhalb des gesamten zweiten Spektralbereichs 56 wiederum rund 0,08 mm.

Die chromatische fokale Verschiebung verläuft zwischen den beiden Spektralbereichen 56, 58 in ein Maximum und innerhalb der beiden Spektralbereiche 56, 58 in jeweils eine Nullstelle, wobei die Nullachse die Lage der Detektorebene gesehen ist. Der spektrale Zwischenbereich zwischen den Spektralbereichen 56, 58 ist durch den Filter 52 herausgefiltert. Durch die relativ große fokale Verschiebung im Zwischenbereich würde ein im Zwischenbereich abgebildetes Bild einen großen Abbildungsfehler durch einen großen Farblängsfehler aufweisen. Das Ausblenden des Zwischenbereichs vermeidet diesen Fehler, so dass die Abbildung in den beiden Spektralbereichen 56, 58 nicht durch eine schlechte Abbildung im Zwischenbereich verschlechtert wird. Durch die Trennung der beiden Spektralbereich 56, 58 ist der Suchkopf 4 ein bi-spektraler Suchkopf, der in den beiden Spektralbereichen 56, 58 Abbildungsinformationen erstellt und verarbeitet.

Durch die Wahl der unterschiedlichen Linsenmaterialien der Linsen in den beiden Teilen 48, 50 ist die Optik 10 beziehungsweise die Detektoroptik 32 achromatisch korrigiert. Durch diese Korrektur verläuft die fokale Verschiebung aus FIG 3 innerhalb des gezeigten Spektralbereichs nicht stetig steigend, sondern weist das gezeigte Maximum auf. Dieser Verlauf führt dazu, dass die Steigung der Verschiebung und damit der Farblängsfehler innerhalb des ersten Spektralbereichs 56 geringer ausfällt als ohne die achromatische Korrektur. Hierdurch weist die Optik 10 im ersten Spektralbereich 56 eine bessere Punktbildschärfe auf, als ohne die achromatische Korrektur. Aus diesem Grund ist die achromatische Korrektur auch vorteilhaft für einen monochromatischen Suchkopf, der ausschließlich im ersten Spektralbereich 56 abbildet. Dieser monochromatische Suchkopf 4 kann identisch zum Suchkopf 4 zu den Figuren 1 und 2 ausgeführt sein kann, bis auf die spektrale Gestaltung des Filters 52. Insofern bildet FIG 2 auch einen monospektralen Suchkopf 4 ab.

Durch eine solche gleichartige Ausführung können ein monospektraler Suchkopf und ein bi-spektraler Suchkopf 4 im Wesentlichen identisch ausgeführt sein, wobei lediglich der Filter 52 spektral verschieden ist. Die Linsen der Detektoroptiken 32 bleiben vollständig gleich. Von den beiden Suchköpfen 4 ist ein Suchkopf 4 bi-spektral und der andere Suchkopf monospektral ausgeführt, beispielsweise nur im ersten Spektralbereich 56 transparent und im zweiten Spektralbereich 58 intransparent. Entsprechend können die beiden Suchköpfe 4 für unterschiedliche Missionsaufgaben optimiert sein. Eine bauliche Veränderung der Suchköpfe 4, insbesondere die Veränderung geometrischer Abmessungen von Tragstrukturen, des optischen Gelenks 30 oder der Primäroptik 24, ist nicht notwendig. Das gleiche gilt auch für ein System aus zwei Lenkflugkörpern 2 mit einem monospektralen Suchkopf und einem bi-spektralen Suchkopf 4.

### Bezugszeichenliste

- 2: Lenkflugkörper
- 4: Suchkopf
- 6: Wirkteil
- 8: Raketentriebwerk
- 10: Optik
- 12: Lenkteil
- 14: Lenkflügel
- 16: Sehfeld
- 18: Objektszene
- 20: Detektor
- 22: Längsachse
- 24: Eingangsoptik
- 26: Primärspiegel
- 28: Fangspiegel
- 30: optisches Gelenk
- 32: Detektoroptik
- 34: Prismenblock
- 36: Prismenblock
- 38: Nickachse
- 40: Rollachse
- 42: Außengehäuse
- 44: Kühler
- 46: Dom
- 48: erster Teil
- 50: zweiter Teil
- 52: Filter
- 54: Kaltblende
- 56: Spektralbereich
- 58: Spektralbereich
- 60: chromatische fokale Verschiebung

## Patentansprüche

1. Suchkopf (4) für einen Lenkflugkörper (2) mit einem Detektor (20) und einer Optik (10) zum Abbilden einer Objektszene (18) auf den Detektor (20), die eine Primäroptik (24), ein optisches Gelenk (30) zum Verschwenken der Primäroptik (24) relativ zu einer Längsachse (22) des Lenkflugkörpers (2) und eine Detektoroptik (32) aufweist, wobei die Detektoroptik (32) eine für zumindest zwei Infrarot-Spektralbereiche (56, 58) achromatisch korrigierte Optik mit zwei Linsen unterschiedlicher Materialien ist, wobei eine der zwei Linsen unterschiedlicher Materialien aus Silizium und die andere der zwei Linsen unterschiedlicher Materialien aus Galliumarsenid ist.

2. Suchkopf (4) nach Anspruch 1,
**dadurch gekennzeichnet,**
**dass** zumindest einer der Infrarot-Spektralbereiche (58) im Mittelwellen-Infrarot-Spektralbereich liegt.

3. Suchkopf (4) nach einem der vorhergehenden Ansprüche,
**dadurch gekennzeichnet,**
**dass** die Optik (10) eine monochromatische Infrarot-Optik (10) ist.

4. Suchkopf (4) nach Anspruch 3,
**dadurch gekennzeichnet,**
**dass** die Optik (10) in einem der beiden Infrarot-Spektralbereichen (56) transparent und in dem anderen Infrarot-Spektralbereich (58) intransparent ist.

5. System aus einem monochromatischen Suchkopf (4) nach einem der Ansprüche 3 oder 4 und einem bi-chromatischen Suchkopf (4) nach einem der Ansprüche 1 oder 2.

6. System nach Anspruch 5,
**dadurch gekennzeichnet,**
**dass** die beiden Suchköpfe (4) die gleiche optische Länge vom ersten optischen Element der Optik (10) bis zum Detektor (20) aufweisen.

7. System nach Anspruch 5 oder 6,
**dadurch gekennzeichnet,**
**dass** die Optiken (10) der beiden Suchköpfe (4) die gleichen Linsen aufweisen.

8. System nach einem der Ansprüche 5 bis 7,
**dadurch gekennzeichnet,**
**dass** die Optiken (10) der beiden Suchköpfe (4) bis auf unterschiedliche Filter (52) baugleich sind.

9. System aus zwei Lenkflugkörpern (2) mit einem System nach einem der Ansprüche 5 bis 8.

## Claims

1. Seeker (4) for a guided missile (2) with a detector (20) and optics (10) for imaging an object scene (18) on the detector (20), which has primary optics (24), an optical joint (30) for pivoting the primary optics (24) relative to a longitudinal axis (22) of the guided missile (2) and detector optics (32), wherein the detector optics (32) are achromatically corrected optics for at least two infrared spectral ranges (56, 58) with two lenses of different materials,
wherein
one of the two lenses of different materials is made of silicon and the other of the two lenses of different materials is made of gallium arsenide.

2. Seeker (4) according to Claim 1, **characterized in that**
at least one of the infrared spectral ranges (58) is in the medium wave infrared spectral range.

3. Seeker (4) according to any one of the preceding claims,
**characterized in that**
the optics (10) are monochromatic infrared optics (10).

4. Seeker (4) according to Claim 3,
**characterized in that**
the optics (10) are transparent in one of the two infrared spectral ranges (56) and non-transparent in the other infrared spectral range (58).

5. System consisting of a monochromatic seeker (4) according to Claim 3 or 4 and a bichromatic seeker (4) according to Claim 1 or 2.

6. System according to Claim 5,
**characterized in that**
the two seekers (4) have the same optical length from the first optical element of the optics (10) to the detector (20).

7. System according to Claim 5 or 6,
**characterized in that**
the optics (10) of the two seekers (4) have the same lenses.

8. System according to any one of Claims 5 to 7,
**characterized in that**
the optics (10) of the two seekers (4) are identical in structure except for different filters (52).

9. System of two guided missiles (2) with a system according to any one of Claims 5 to 8.

## Revendications

1. Tête chercheuse (4) pour un missile guidé (2) comprenant un détecteur (20) et une optique (10) destinée à la formation d'image d'une scène d'objet (18) sur le détecteur (20), qui comporte une optique primaire (24), une articulation optique (30) destinée à faire pivoter l'optique primaire (24) par rapport à un axe longitudinal (22) du missile guidé (2) et une optique de détection (32), dans laquelle l'optique de détection (32) est une optique à correction achromatique destinée à au moins deux plages spectrales infrarouges (56, 58) et comportant deux lentilles constituées de matériaux différents, dans laquelle l'une des deux lentilles constituées de matériaux différents est en silicium et l'autre des deux lentilles constituées de matériaux différents est en arséniure de gallium.

2. Tête chercheuse (4) selon la revendication 1,
**caractérisée en ce qu'**au moins l'une des plages spectrales infrarouges (58) se situe dans la plage spectrale de l'infrarouge moyen.

3. Tête chercheuse (4) selon l'une des revendications précédentes,
**caractérisée en ce que** l'optique (10) est une optique infrarouge monochromatique (10).

4. Tête chercheuse (4) selon la revendication 3,
**caractérisée en ce que** l'optique (10) est transparente dans l'une des deux plages spectrales infrarouges (56) et non transparente dans l'autre plage spectrale infrarouge (58).

5. Système constitué d'une tête chercheuse monochromatique (4) selon l'une des revendications 3 ou 4 et d'une tête chercheuse bichromatique (4) selon l'une des revendications 1 ou 2.

6. Système selon la revendication 5,
**caractérisé en ce que** les deux têtes chercheuses (4) ont la même longueur optique depuis le premier élément optique de l'optique (10) jusqu'au détecteur (20).

7. Système selon la revendication 5 ou 6,
**caractérisé en ce que** les optiques (10) des deux têtes chercheuses (4) comportent les mêmes lentilles.

8. Système selon l'une des revendications 5 à 7,
**caractérisé en ce que** les optiques (10) des deux têtes chercheuses (4) présentent des structures identique à l'exception de filtres différents (52).

9. Système constitué de deux missiles guidés (2) comportant un système selon l'une des revendications 5 à 8.
